(19) Europäisches Patentamt / European Patent Office / Office européen des brevets

(11) **EP 3 850 185 B1**

(12) **FASCICULE DE BREVET EUROPEEN**

(45) Date de publication et mention de la délivrance du brevet:
**24.01.2024 Bulletin 2024/04**

(21) Numéro de dépôt: **19765735.6**

(22) Date de dépôt: **12.09.2019**

(51) Classification Internationale des Brevets (IPC):
**E21B 47/003** (2012.01)

(52) Classification Coopérative des Brevets (CPC):
**E21B 43/01; E21B 47/003; G01M 3/2815; G01M 3/283**

(86) Numéro de dépôt international:
**PCT/EP2019/074295**

(87) Numéro de publication internationale:
**WO 2020/053318 (19.03.2020 Gazette 2020/12)**

(54) **PROCÉDÉ DE DÉTERMINATION DU VOLUME LIBRE D'UN ESPACE ANNULAIRE D'UNE CONDUITE FLEXIBLE ET SYSTÈME ASSOCIÉ**

VERFAHREN ZUR BESTIMMUNG DES FREIEN VOLUMENS EINES RINGRAUMES EINES FLEXIBLEN ROHRES UND ZUGEHÖRIGES SYSTEM

METHOD FOR DETERMINING THE FREE VOLUME OF AN ANNULAR SPACE OF A FLEXIBLE PIPE AND ASSOCIATED SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.09.2018 FR 1858166**

(43) Date de publication de la demande:
**21.07.2021 Bulletin 2021/29**

(73) Titulaire: **TechnipFMC Subsea France**
**92400 Courbevoie (FR)**

(72) Inventeur: **GAUBERT, Isabelle**
**76490 Rives-en-Seine (FR)**

(74) Mandataire: **Lavoix**
**2, place d'Estienne d'Orves**
**75441 Paris Cedex 09 (FR)**

(56) Documents cités:
**US-A1- 2017 145 808**

• **J. Smith Franck: "UKOOA Guidance Note on Monitoring Methods and Integrity Assurance for Unbonded Flexible Pipe", , 8 octobre 2002 (2002-10-08), pages 1-64, XP055590832, Extrait de l'Internet: URL:https://www.ukooa.co.uk/issues/fpso/docs/guidancenoterev05.pdf [extrait le 2019-05-22]**
• **DOMINIQUE DION ET AL: "Flexible Pipe Integrity Monitoring: A New System to Assess the Flexible Pipe Annulus Condition", PROCEEDINGS OF OFFSHORE TECHNOLOGY CONFERENCE, 1 janvier 2010 (2010-01-01), XP055054466, DOI: 10.4043/20973-MS ISBN: 978-1-55-563304-2**

EP 3 850 185 B1

**Description**

La présente invention concerne un procédé de détermination du volume libre d'un espace annulaire d'une conduite flexible.

« UKOOA Guidance Note on Monitoring Methods and Integrity Assurance for Unbonded Flexible Pipe » de J. Smith Franck et US 2017/145808 divulguent des procédés de détermination du volume libre d'un espace annulaire. « Flexible Pipe Integrity Monitoring: A New System to Assess the Flexible Pipe Annulus Condition » de Dominique Dion et al. divulgue une méthode de détermination de l'intégrité de l'espace annulaire d'une conduite flexible.

La conduite flexible est notamment telle que décrite dans les documents normatifs publiés par l'American Petroleum Institute (API), API 17J « Spécification for Unbonded Flexible Pipe » 4ème Edition Mai 2014, et API RP 17B « Recommended Practice for Flexible Pipe » 5ème Edition Mai 2014. La conduite flexible est une conduite montante (ou «riser» en anglais) et/ou une conduite posée sur le fond marin (ou « flowline » en anglais).

La conduite est par exemple destinée au transport des hydrocarbures en eau profonde et est donc susceptible d'être utilisée sous fortes pressions, supérieures à 100 bars, voire jusqu'à 1000 bars, et à des températures élevées, supérieures à 130°C, voire 170°C, pendant de longues périodes de temps, c'est-à-dire plusieurs années, typiquement 30 ans.

Les conduites flexibles comprennent un assemblage de tronçons flexibles ou un seul tronçon flexible. Elles comportent généralement une gaine externe de protection définissant un volume intérieur et au moins une gaine interne imperméable disposée à l'intérieur du volume intérieur.

Cette gaine interne est typiquement une gaine de pression délimitant un passage de circulation d'un fluide.

Le fluide est, en particulier, un hydrocarbure comportant des gaz corrosifs comme du dioxyde de carbone et du sulfure d'hydrogène.

La gaine interne et la gaine externe délimitent entre elles un espace annulaire. Des couches d'armures de traction formées par des nappes de fils généralement métalliques sont disposées dans l'espace annulaire, pour assurer une bonne résistance à la traction de la conduite flexible.

Dans certains cas, l'espace annulaire contenant les couches d'armures de traction est soumis à des hydrocarbures et à des gaz acides tels que par exemple de l'hydrogène ($H_2$), du sulfure d'hydrogène ($H_2S$) et du dioxyde de carbone ($CO_2$) issus des fluides transportés, et dont la pression partielle est relativement élevée.

En présence d'eau, provenant de l'eau contenue dans l'hydrocarbure transporté ayant diffusé par perméation à travers la gaine interne puis condensé dans l'espace annulaire, ou provenant de l'étendue d'eau en cas d'une déchirure de la gaine externe, les couches d'armures de traction subissent de la corrosion pouvant conduire, suivant la sévérité du milieu régnant dans l'espace annulaire, à une perte d'intégrité des propriétés mécaniques de la conduite flexible et à terme à sa ruine.

Par ailleurs, la combinaison du milieu corrosif associé à des chargements mécaniques peut conduire à la formation de nombreux mécanismes de corrosion, dont la corrosion sous contrainte (ou SCC de l'anglais « Stress Corrosion Craking »).

Pour pallier ce problème, et maintenir la résistance mécanique des couches d'armures, il est nécessaire de diminuer et/ou de stopper les phénomènes de corrosion.

Une solution possible consiste à extraire les gaz acides hors de l'annulaire en les pompant. A cet effet, une pompe à vide peut être raccordée à l'annulaire. La pompe à vide est activée pour empêcher la condensation de la vapeur d'eau diffusée à travers l'annulaire, pour évaporer l'eau liquide déjà présente dans l'annulaire, et pour diminuer la pression partielle en gaz acides.

WO2014/000760 décrit un procédé du type précité. Ce procédé est mis en oeuvre à l'aide d'une pompe à vide directement raccordée à la sortie de l'espace annulaire, et dont le refoulement est envoyé à un évent.

Un autre paramètre d'importance pour suivre l'intégrité des couches d'armures est la détermination du volume libre de l'espace annulaire. En effet, l'espace annulaire est une zone très confinée dans laquelle un volume libre est présent dans les interstices définis entre les fils d'armures d'une couche d'armures, ou entre deux couches d'armures distinctes, par exemple la voûte de pression et une couche d'armures.

Comme précisé plus haut, l'espace annulaire est susceptible de se remplir au moins en partie d'eau. Dans ce cas, le volume libre diminue.

Il est donc intéressant de mesurer le volume libre présent dans l'espace annulaire à intervalles réguliers pour déterminer si de l'eau est présente dans l'espace annulaire et prendre les mesures correctives appropriées.

Pour mesurer le volume libre, WO2014/000760 prévoit de laisser la pression augmenter dans l'espace annulaire par diffusion des gaz provenant du passage de circulation de fluide, de mettre ensuite sous vide l'espace annulaire, de mesurer la quantité de matière pompée hors de l'espace annulaire, et de la relier à la différence de pression observée lors du pompage, via la loi des gaz parfaits, pour en déduire le volume libre de l'espace annulaire.

Une telle méthode ne donne pas entière satisfaction. En effet, elle doit être mise en oeuvre lorsqu'une quantité significative de gaz s'est échappée dans l'espace annulaire à travers la gaine interne. Pour des gaines internes relativement imperméables, il est donc long et parfois fastidieux d'obtenir une quantité de gaz suffisante pour réaliser un test de détermination du volume libre donnant des résultats significatifs.

Par ailleurs, la faible quantité de gaz pompé rend imprécise la mesure, pouvant conduire à des erreurs significatives sur l'estimation du volume libre.

De plus, l'accumulation de gaz corrosifs dans l'espace annulaire, avant le pompage est susceptible d'engendrer de la corrosion.

Un but de l'invention est donc d'obtenir une méthode de suivi assurant une durée de vie améliorée pour une conduite flexible, pour limiter notamment la corrosion des armures métalliques.

A cet effet, l'invention a pour objet un procédé selon la revendication 1.

Optionnellement, le procédé est selon l'une des revendications 2 à 12.

Optionnellement, le gaz de mesure est fourni à partir d'un réservoir de gaz de mesure ou à partir d'un réseau de fourniture de gaz prévu sur un ensemble de surface.

L'invention a également pour objet un système de régulation et de contrôle d'une conduite flexible apte à mesurer le volume libre d'un espace annulaire de la conduite flexible, selon la revendication 13.

L'invention sera mieux comprise à la lecture de la description qui va suivre, donnée uniquement à titre d'exemple, et faite en se référant aux dessins annexes, sur lesquels :

- la figure 1 est une vue en perspective éclatée d'une première conduite flexible destinée à être surveillée par la méthode de suivi selon l'invention ;
- la figure 2 est une vue schématique représentant les composants principaux d'un système de régulation et de contrôle pour la mise en oeuvre de la méthode selon l'invention ;
- la figure 3 est un graphe représentant la pression mesurée dans l'espace annulaire en fonction du temps, prise successivement lors d'une mise en dépression de l'espace annulaire, puis lors d'un cycle de test.

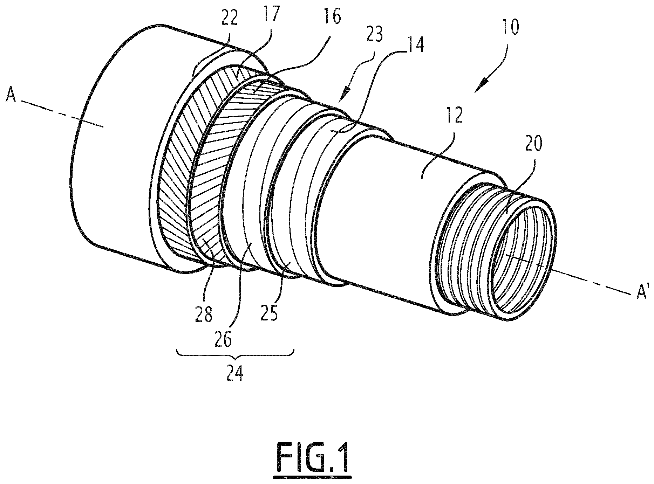

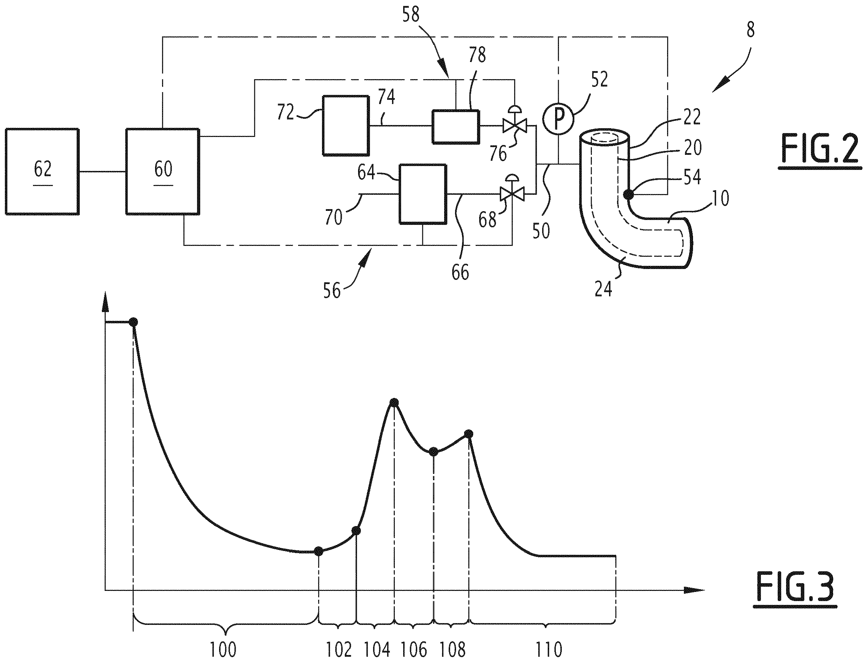

La figure 2 illustre schématiquement un premier système 8 de régulation et de contrôle d'une conduite flexible 10, dont un exemple est représenté partiellement sur la figure 1.

La conduite flexible 10 est destinée à être disposée à travers une étendue d'eau (non représentée) dans une installation d'exploitation de fluide, notamment d'hydrocarbures.

L'étendue d'eau est par exemple une mer, un lac ou un océan. La profondeur de l'étendue d'eau au droit de la conduite flexible 10 est par exemple comprise entre 50 m et 4000 m.

L'installation d'exploitation de fluide comporte un ensemble de surface, généralement flottant, et un ensemble de fond qui sont généralement raccordés par la conduite flexible 10. La conduite flexible 10 permet aussi de relier des ensembles de fond entre eux, ou des ensembles de surface entre eux.

La conduite flexible 10 comporte un tronçon central, illustré en partie sur la figure 1, et à chacune des extrémités axiales du tronçon central, un embout d'extrémité non représenté.

La conduite flexible 10 est, dans cet exemple, une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite 10.

Avantageusement, toutes les couches adjacentes de la conduite flexible 10 sont libres de se déplacer l'une par rapport à l'autre. Une telle conduite est par exemple décrite dans les documents normatifs publiés par l'American Petroleum Institute (API), API 17J (Mai 2014, 4ème édition) et API RP17B (Mai 2014, 5ème édition).

La conduite flexible 10 s'étend suivant un axe A-A'.

Dans tout ce qui suit, les termes « extérieur » et « intérieur » s'entendent généralement de manière radiale par rapport à l'axe A-A' de la conduite flexible 10, le terme « extérieur » s'entendant comme relativement plus éloigné radialement de l'axe A-A' et le terme « intérieur » s'entendant comme relativement plus proche radialement de l'axe A-A' de la conduite flexible 10.

Comme illustré sur la figure 1, la conduite flexible 10 délimite une pluralité de couches concentriques autour de l'axe A-A', qui s'étendent continûment le long de la conduite flexible 10 jusqu'aux extrémités de la conduite flexible 10.

En particulier, la conduite flexible 10 comprend une gaine interne 12 tubulaire, au moins une couche d'armures de traction 16, 17 et une gaine externe 22. Avantageusement, la conduite flexible 10 comporte en outre une voûte de pression 14, et/ou une carcasse interne 20.

De manière connue, la gaine interne 12 est destinée à confiner de manière étanche le fluide transporté dans la conduite flexible 10. La gaine interne 12 est, avantageusement, formée en matériau polymère, par exemple à base d'une polyoléfine telle que du polyéthylène ou du polypropylène, à base d'un polyamide tel que du PA11 ou du PA12, ou à base d'un polymère fluoré tel que du polyfluorure de vinylidène (PVDF).

En variante, la gaine interne 12 est formée à base d'un polymère haute performance tel qu'un polyaryléthercétone (PAEK) tel que le polyéthercétone (PEK), le polyétheréthercétone (PEEK), le polyétheréthercétonecétone (PEEKK), le polyéthercétonecétone (PEKK) ou le polyéthercétonééthercétonecétone (PEKEKK), le polyamide-imide (PAI), le polyéther-imide (PEI), le polysulfone (PSU), le polyphénylsulfone (PPSU), le polyéthersulfone (PES) , le polyarylsulfone (PAS), le polyphénylèneéther (PPE), le polysulfure de phénylène (PPS) les polymères à cristaux liquides (LCP), le polyphtalamide (PPA), les dérivés fluorés tels que le polytétrafluoroéthylène (PTFE), le perfluoropolyéther (PFPE), le perfluoroalkoxy (PFA) ou l'éthylène chlorotrifloroethylène (ECTFE) et/ou leurs mélanges.

L'épaisseur de la gaine interne 12 est, par exemple, comprise entre 5 mm et 20 mm.

La gaine interne 12 définit intérieurement un passage central de circulation d'un fluide, d'axe A-A'.

La carcasse 20 est formée d'un feuillard métallique profilé, enroulé en spirale. Les spires du feuillard sont avantageusement agrafées les unes aux autres, ce qui permet de reprendre les efforts radiaux d'écrasement. Dans cet exemple, la carcasse 20 est disposée à l'intérieur de la gaine interne 12 dans le passage central. La conduite flexible 10 est alors désignée par le terme anglais « rough bore » en raison de la géométrie de la carcasse 20.

En variante (non représentée), la conduite flexible 10 est dépourvue de carcasse interne, elle est alors désignée par le terme anglais « smooth bore ».

La gaine externe 22 est située à l'extérieur de la gaine interne 12. La gaine externe 22 définit un volume intérieur dans lequel sont situées la carcasse 20, la gaine interne 12, la voûte de pression 14 et la ou chaque couche d'armures de traction 16, 17.

La gaine externe 22 définit, avec la gaine interne 12, un espace annulaire 24.

L'espace annulaire 24 est défini dans le volume intérieur. L'espace annulaire 24 est susceptible d'être inondé par un liquide, notamment par de l'eau provenant de l'étendue d'eau ou encore de l'eau contenu dans le fluide transporté qui a diffusé puis condensé au travers de la gaine interne 12, vers l'espace annulaire 24.

La gaine externe 22 présente typiquement une forme d'un cylindre de révolution d'axe A-A'. La gaine externe 22 présente généralement un diamètre compris entre 50 mm (soit 2 pouces) et 500 mm (soit 20 pouces), de préférence entre 120 mm (soit 5 pouces) et 330 mm (soit 13 pouces), et une épaisseur comprise entre 0,5 mm et 20 mm, de préférence entre 4 mm et 15 mm.

La voûte de pression 14 est située dans l'espace annulaire 24, à l'extérieur de la gaine interne 12. La voûte de pression 14 est configurée pour reprendre les efforts radiaux liés à la pression régnant à l'intérieur de la gaine interne 12.

La voûte de pression 14 est avantageusement formée d'un fil profilé 25 métallique enroulé en hélice autour de la gaine interne 12. Le fil profilé 25 présente de préférence une géométrie en forme de Z. La géométrie en Z permet d'améliorer la résistance mécanique générale et de réduire la masse de la conduite flexible 10.

En variante, le fil profilé 25 présente une géométrie en forme de T, de U, de K, de X ou de I.

La voûte de pression 14 est enroulée en hélice à pas court autour de la gaine interne 12. L'angle d'hélice est de valeur absolue proche de 90° par rapport à l'axe A-A' de la conduite flexible 10, typiquement compris entre 75° et 90°.

La conduite flexible 10 comprend optionnellement une frette 26.

La frette 26, lorsqu'elle est présente, est constituée par un enroulement en spirale d'au moins un fil avantageusement de section transversale rectangulaire autour de la voûte de pression 14. La superposition de plusieurs fils enroulés autour de la voûte de pression 14 peut avantageusement remplacer une épaisseur totale de frette 26 donnée. Ceci augmente la résistance à l'éclatement de la conduite flexible 10. L'enroulement du au moins un fil est à pas court autour de l'axe A-A' de la conduite flexible 10, c'est-à-dire avec un angle d'hélice de valeur absolue proche de 90°, typiquement compris entre 75° et 90°.

Dans une variante de réalisation de l'invention, la voûte de pression 14 et la frette 26 sont remplacées par une voûte de pression 14 d'épaisseur plus importante formée à partir d'un fil profilé 25 en métal présentant une géométrie en forme de T, de U, de K, de X ou de I, et/ou à partir d'au moins une bande en aramide à résistance mécanique élevée (Technora® ou Kevlar®), et/ou à partir d'au moins une bande composite comprenant une matrice thermoplastique dans laquelle sont noyées des fibres de carbone ou des fibres de verre.

Chaque couche d'armures de traction 16, 17 est située dans l'espace annulaire 24, à l'extérieur de la voûte de pression 14.

Dans l'exemple représenté sur la figure 1, la conduite flexible 10 comporte au moins une paire de couches d'armures de traction 16, 17.

Chaque paire comporte une première couche d'armures de traction 16 appliquée sur la voûte de pression 14, sur la gaine interne 12 ou sur une autre paire de couches d'armures de traction 16, 17, et une deuxième couche d'armures de traction 17, disposée autour de la première couche d'armures de traction 16.

Chaque couche d'armures de traction 16, 17 comporte au moins un élément d'armure 28 longitudinal enroulé en hélice à pas long autour de l'axe A-A' de la conduite flexible 10. La valeur d'hélice est inférieure ou égale à 60°, et est typiquement comprise entre 10° et 60°.

Les éléments d'armure 28 d'une première couche d'armures de traction 16 sont enroulés généralement suivant un angle opposé par rapport aux éléments d'armure 28 d'une deuxième couche d'armures de traction 17. Ainsi, si l'angle d'enroulement des éléments d'armure 28 de la première couche d'armures de traction 16 est égal à + α, α étant compris entre 10° et 60°, l'angle d'enroulement des éléments d'armure 28 de la deuxième couche d'armures de traction 17 disposée au contact de la première couche d'armures de traction 16 est par exemple de - α, avec α compris entre 10° et 60°.

Les éléments d'armure 28 sont par exemple formés par des fils métalliques ou en matériau composite, ou par des rubans à résistance mécanique élevée.

Dans cet exemple, chaque couche d'armures de traction 16, 17 repose sur au moins une bande anti-usure (non représentée). La bande anti-usure est par exemple réalisée en plastique, notamment à base d'un polyamide, d'un polyfluorure de vinylidène (PVDF), d'un polytétrafluoroéthylène (PTFE), d'un polyétheréthercétone (PEEK) ou d'un polyphénylsulfone (PPSU). Elle présente une épaisseur inférieure à l'épaisseur de chaque gaine.

Avantageusement, un ruban de maintien tel qu'une bande en aramide à résistance mécanique élevée (Technora® ou Kevlar®) est enroulé autour de la deuxième couche d'armures de traction 17 la plus à l'extérieur par rapport à l'axe A-A', pour assurer un maintien mécanique des couches d'armures de traction 16, 17. Alternativement, les fibres d'aramide sont remplacées par des fibres de verre ou des fibres de carbone.

Le système 8 de régulation et de contrôle de la conduite flexible 10 est illustré sur la figure 2. En référence à cette figure, le système 8 comporte une conduite 50 d'accès à l'espace annulaire 24, un capteur de pression 52 dans l'espace annulaire 24, ici monté sur la conduite d'accès 50, et un capteur de température 54 dans l'espace annulaire 24.

Le système 8 comporte en outre un ensemble 56 de mise en dépression de l'espace annulaire 24, et un ensemble 58 d'injection d'un gaz de mesure dans l'espace annulaire 24.

On entend par « mise en dépression », l'action visant à abaisser la pression d'un milieu donné en créant un vide partiel, par l'intermédiaire d'un dispositif tel que par exemple une pompe.

Le système 8 comporte en outre une unité 60 de commande, propre à relever les mesures du capteur de pression 52 et du capteur de température 54, et à piloter l'ensemble de mise en dépression 56 et l'ensemble d'injection de gaz de mesure 58. Le système 8 comporte de plus une unité de calcul 62 propre à calculer un volume libre de l'espace annulaire 24 sur la base des mesures relevées par l'unité de commande 60.

La conduite 50 d'accès à l'espace annulaire 24 est ici située en surface. Elle débouche dans l'espace annulaire 24 à travers un embout (non représenté) de la conduite flexible 10.

Le capteur de pression 52 est ici piqué sur la conduite d'accès 50. Il est propre à mesurer une pression absolue de l'espace annulaire 24 en surface.

Alternativement, le capteur de pression 52 est disposé dans l'espace annulaire 24 de la conduite flexible 10.

Le capteur de température 54 est disposé dans l'espace annulaire 24 pour mesurer une température de l'espace annulaire 24.

Le capteur de température 54 comprend au moins une fibre optique disposée dans l'espace annulaire 24. La au moins une fibre optique est connectée à l'une de ses extrémités, à l'unité 60 de commande tel qu'un appareil de détection et d'interprétation de signaux afin d'afficher et donc de mesurer en temps réel la température régnant dans l'espace annulaire 24.

En variante, le capteur de température 54 comprend un logiciel de calcul et de simulation permettant d'obtenir d'une estimation de la température régnant dans l'espace annulaire 24.

Ainsi, la pression régnant dans l'espace annulaire 24 et la température régnant dans l'espace annulaire 24 sont relevées à l'aide de capteurs 52, 54 qui peuvent être disposés dans l'espace annulaire 24, ou à l'extérieur de l'espace annulaire 24 en étant raccordés à l'espace annulaire 24.

L'ensemble de mise en dépression 56 comporte une pompe à vide 64, une conduite 66 de raccordement à l'espace annulaire 24, une première vanne d'arrêt 68, et un évent 70.

La pompe à vide 64 présente une entrée raccordée à la conduite de raccordement 66, et une sortie raccordée à l'évent 70. Elle est propre à engendrer une dépression par pompage de fluide entre l'entrée et la sortie. Elle est raccordée à l'unité de commande 60 pour être pilotée par celle-ci.

Dans cet exemple, la conduite de raccordement 66 débouche dans la conduite d'accès 50 et est raccordée à l'espace annulaire 24 par l'intermédiaire de la conduite d'accès 50. En variante, la conduite de raccordement 66 débouche directement dans l'espace annulaire 24, sans passer par la conduite d'accès 50.

La première vanne d'arrêt 68 est montée sur la conduite de raccordement 66 entre la pompe à vide 64 et l'espace annulaire 24. Elle est pilotée par l'unité de commande 60.

L'ensemble d'injection de gaz de mesure 58 comporte un réservoir 72 de gaz de mesure, une conduite d'injection 74, une deuxième vanne d'arrêt 76, et un débitmètre 78 de gaz de mesure injecté.

Le réservoir de gaz de mesure 72 est par exemple formé par une bouteille ou une cuve contenant le gaz de mesure. De préférence, le gaz de mesure est un gaz inerte, notamment de l'azote.

Le gaz de mesure n'est pas issu du passage central interne de la conduite flexible 10 et présente une composition distincte de celui-ci.

La conduite d'injection 74 est raccordée au réservoir 72. Elle débouche dans cet exemple dans la conduite d'accès 50, en parallèle de la conduite de raccordement 66 et est raccordée à l'espace annulaire 24 par la conduite d'accès 50. En variante, la conduite d'injection 74 débouche directement dans l'espace annulaire 24, sans passer par la conduite d'accès 50.

La deuxième vanne d'arrêt 76 est montée sur la conduite d'injection 74 entre le réservoir d'azote 72 et l'espace annulaire 24. Elle est pilotée par l'unité de commande 60.

Le débitmètre 78 est interposé entre le réservoir 72 et la deuxième vanne d'arrêt 76. Il est propre à engendrer une mesure de la quantité de gaz de mesure ayant traversé le débitmètre 78, notamment à l'aide d'un index de flux, communément désigné par totalisateur ou compteur.

Il est raccordé à l'unité de commande 60 pour permettre le relevé, par l'unité de commande 60 de la mesure, notamment de l'index de flux.

Comme on le verra plus bas, l'unité de commande 60 est propre à être activée pour réaliser des cycles de mise en dépression de l'espace annulaire 24, et entre les cycles de mise en dépression, des cycles de mesure du volume libre de l'espace annulaire 24.

Pour chaque cycle de mise en dépression, l'unité de commande 60 est propre à ouvrir la première vanne d'arrêt 68, à activer la pompe à vide 64 et à détecter la pression mesurée par le capteur de pression 52 pour déterminer un état stationnaire de mise sous vide de l'espace annulaire 24.

Pour chaque cycle de mesure, l'unité de commande 60 est propre à fermer la première vanne d'arrêt 68, à désactiver la pompe à vide 64, à ouvrir la deuxième vanne d'arrêt 76, pour permettre l'injection d'une quantité déterminée de gaz de mesure dans l'espace annulaire 24.

L'unité de commande 60 est en outre propre, pour chaque cycle de mesure, à relever la mesure du capteur de pression 52 pour maintenir la pression dans l'espace annulaire 24 inférieure à la pression atmosphérique lorsque l'injection de la quantité déterminée de gaz de mesure est effectuée.

L'unité de commande 60 est également propre, pour chaque cycle de mesure, à relever la pression P1 et l'index de flux N1 avant l'injection, puis la pression P2 et l'index de flux N2 après l'injection, lorsque la mesure de pression est stable. L'unité de commande 60 est également propre à relever la température T dans l'espace annulaire 24 après l'injection.

L'unité de calcul 62 est propre à acquérir les mesures de pression P1, P2, d'index de flux N1, N2 avant et après l'injection, et la température T de l'espace annulaire 24 et à calculer le volume libre V par la loi des gaz parfaits :

$$V = (N2 - N1) \times R \times T / (P2 - P1)\ (1),$$

où R est la constante des gaz parfaits.

En variante, le gaz de mesure est approvisionné par un réseau de fourniture de gaz initialement prévu au niveau de l'ensemble de surface. La conduite d'injection 74 via la conduite d'accès 50 raccorde le réseau de l'ensemble de surface directement à l'espace annulaire 24 de la conduite flexible 10.

Le débitmètre 78, l'unité de commande 60 et l'unité de calcul 62, fonctionnent de la même manière que précédemment, pour l'utilisation d'un réservoir 72.

Un procédé d'opération du système de régulation et de contrôle 8 selon l'invention, pour la mise en oeuvre d'un procédé de détermination du volume libre d'un espace annulaire 24 d'une conduite flexible 10, va maintenant être décrit.

Lorsque la conduite flexible 10 est en service, une succession de cycles de mise en dépression sont réalisés. Comme indiqué plus haut, l'unité de commande 60 ouvre la première vanne d'arrêt 68, maintient fermée la deuxième vanne d'arrêt 76, et active la pompe à vide 64.

Comme illustré par la référence 100 sur la figure 3, la pression dans l'espace annulaire 24 diminue alors progressivement.

L'unité de commande 60 relève la pression mesurée par le capteur de pression 52 et vérifie l'atteinte d'un état stationnaire de mise sous vide de l'espace annulaire 24.

Lorsque l'état stationnaire est atteint, l'unité de commande 60 désactive la pompe à vide 64 et ferme la première vanne d'arrêt 68. L'espace annulaire 24 est alors isolé. La pression absolue dans l'espace annulaire 24, prise en surface, est alors avantageusement inférieure à 1 bara, de préférence entre 5 mbara et 800 mbara. La pression absolue dans l'espace annulaire dépend du type de structure de la conduite flexible 10 contrôlée.

On entend par « isolé » ou « isolation », l'action de séparer un milieu d'un autre milieu afin d'empêcher tout transfert de matière et/ou de fluide, par l'intermédiaire de moyens de séparation tels que par exemple une vanne, un clapet, un bouchon, une paroi.

Comme illustré par la référence 102 sur la figure 3, la pression dans l'espace annulaire 24 augmente alors progressivement sous l'effet de la diffusion des gaz à travers la gaine interne 20 vers l'espace annulaire 24.

Plus précisément, la pression mesurée dans l'espace annulaire 24 augmente progressivement mais de façon non linéaire, typiquement selon une courbe exponentielle. Dès lors que l'on observe que la courbe devient sensiblement linéaire, on considère que l'espace annulaire 24 est sensiblement stabilisé, bien que la diffusion des gaz continue de manière homogène.

Lorsqu'un cycle de mesure doit être démarré, l'unité de commande 60 relève une première pression P1 dans l'espace annulaire 24, telle que mesurée par le capteur de pression 52, et relève une première mesure d'index de flux N1 à partir du débitmètre 78. L'unité de commande 60 relève en outre la valeur de température T dans l'espace annulaire 24.

Puis, comme illustré par la référence 104 sur la figure 3, l'unité de commande 60 ouvre la deuxième vanne d'arrêt 76 pour permettre l'injection d'une quantité de gaz de mesure déterminée à travers la conduite d'injection 74 jusqu'à l'espace annulaire 24.

Lors de l'injection de gaz de mesure, l'unité de commande 60 mesure l'augmentation de pression dans l'espace annulaire 24 et contrôle cette augmentation de pression pour qu'elle reste inférieure à la pression atmosphérique, notamment inférieure à 1 bara, de préférence entre 50 mbara et 800 mbara.

Plus précisément, l'augmentation de pression dans l'espace annulaire est liée à la fois à l'injection du gaz de mesure et à la diffusion naturelle des gaz contenus dans le fluide circulant dans le passage central interne.

Lorsque l'injection est terminée, l'unité de commande 60 ferme la deuxième vanne d'arrêt 76 pour isoler l'espace annulaire 24.

La pression mesurée dans l'espace annulaire 24 après l'étape d'injection atteint un maximum inférieur à la pression atmosphérique.

L'unité de commande 60 maintient alors l'espace annulaire 24 isolé pendant une période de temps correspondant à une stabilisation de la pression, comme illustré par la référence 106.

La pression mesurée dans l'espace annulaire 24 diminue lors de l'étape de stabilisation du fait de l'homogénéisation du gaz de mesure le long de la conduite 10.

Plus précisément, la pression mesurée dans l'espace annulaire 24 diminue depuis le maximum inférieur à la pression atmosphérique jusqu'à un point bas. Durant une période de temps $\Delta t$, le gaz de mesure qui a été injecté dans l'espace annulaire 24 de la conduite 10 depuis la partie supérieure située en surface, doit progresser le long des fils d'armures 28 des couches d'armures de traction 16, 17 jusqu'à sa partie inférieure située dans l'étendue d'eau.

La période de temps $\Delta t$ varie selon la longueur et le diamètre de la conduite 10. Typiquement, $\Delta t$ est compris entre plusieurs dizaines de minutes et quelques heures.

Pendant cette période de temps $\Delta t$, en combinaison du phénomène d'homogénéisation du gaz de mesure le long de la conduite 10, les gaz contenus dans le fluide circulant dans le passage central interne continuent de diffuser au travers de la gaine interne 12 vers l'espace annulaire 24.

Lorsque la pression mesurée par le capteur 52 se stabilise ou atteint un minimum, l'unité de commande 60 relève une deuxième valeur de pression P2 dans l'espace annulaire 24 à partir du capteur de pression 52 et un deuxième index de flux N2 à partir du débitmètre 78.

Ceci étant fait, l'unité de calcul 62 récupère la première valeur de pression P1, la deuxième valeur de pression P2, le premier index de flux N1, le deuxième index de flux N2 et la valeur de température mesurée T et calcule le volume libre V de l'espace annulaire 24 par l'équation (1) ci-dessus.

Comme indiqué par la référence 108 sur la figure 3, la pression dans l'espace annulaire 24 augmente à nouveau sous l'effet des gaz diffusés depuis la gaine interne 20.

L'unité de commande 60 démarre alors un nouveau cycle de mise en dépression, tel décrit précédemment, comme illustré par la référence 110 sur la figure 3.

Ce cycle de mise en dépression peut être suivi d'au moins un autre cycle de mesure, tel que décrit précédemment.

Grâce à l'invention qui vient être décrite, il est possible de combiner des cycles de mise en dépression avec des cycles de mesure pour évaluer de manière très précise le volume libre de l'espace annulaire 24. L'évaluation du volume libre est effectuée avec une quantité significative de gaz de mesure, ce qui permet d'obtenir des résultats précis, à des instants choisis par l'opérateur, sans avoir à attendre qu'une quantité significative de gaz diffuse dans l'espace annulaire 24, et en supprimant le risque de corrosion dû au gaz diffusé.

Le système de régulation et de contrôle 8 peut être installé facilement et mis en oeuvre automatiquement en le raccordant de manière permanente à l'espace annulaire 24 de la conduite flexible 10, de préférence au niveau de l'embout supérieur.

Le système de régulation et de contrôle 8 est ainsi placé dans une installation de surface sur laquelle débouche la conduite flexible 10, ou sur un support transportable, et est apte à évaporer l'eau liquide de l'espace annulaire 24 lorsqu'e celui-ci a été inondé.

Il est ainsi possible de contrôler la présence d'eau dans l'espace annulaire 24 pour empêcher, ou au moins diminuer la corrosion et intervenir au plus vite lorsque de l'eau est détectée. La durée de vie des composants contenus dans l'espace annulaire 24, notamment des couches d'armures 16, 17, ou de la voûte 14 est augmentée.

Le système de régulation et de contrôle 8 permet également d'estimer de manière précise la durée de vie de la conduite flexible 10 en tenant compte des phénomènes de corrosion.

Dans une variante, d'autres capteurs sont disposés dans l'espace annulaire 24 ou/et sur la conduite d'accès 50 pour suivre le contenu de l'espace annulaire 24. Ces capteurs sont par exemple des capteurs de mesure d'hydrogène, de dioxyde de carbone, de sulfure d'hydrogène, de méthane ou/et de volume d'eau extrait.

Dans une variante, des cycles de circulation de gaz neutre, en particulier d'azote, dans l'espace annulaire 24 sont mis en oeuvre après un cycle de mise en dépression.

Selon une variante d'exécution de l'invention, le procédé de détermination du volume libre comprend une étape supplémentaire.

Après l'étape de mise en dépression et d'isolation de l'espace annulaire 24, on relève une pression de référence Pr. Cette pression de référence Pr correspond au minimum de la courbe illustrée sur la figure 3, à la fin de la phase référencée 100.

On laisse ensuite les gaz contenus dans le fluide circulant dans le passage central interne diffuser naturellement à travers la gaine interne 12 dans l'espace annulaire 24, pendant une période de temps $\Delta t$ défini.

$\Delta t$ varie en fonction de la longueur et du diamètre de la conduite 10.

$\Delta t$ est compris entre quelques dizaines de minutes et quelques heures, par exemple entre 15 minutes et 4 heures, de préférence entre 30 minutes et 2 heures.

Dès que la pression mesurée dans l'espace annulaire 24 par le capteur 52 décrit une courbe exponentielle et que cette dernière décrit une pente sensiblement linéaire, au bout de la période de temps $\Delta t$, on considère que le milieu est stabilisé et que la diffusion des gaz continue de manière homogène.

On relève alors une première pression P1 régnant dans l'espace annulaire 24 et la température T régnant dans l'espace annulaire 24.

Lorsqu'un cycle de mesure doit être démarré, l'unité de commande 60 relève une première pression P1 dans l'espace annulaire 24, telle que mesurée par le capteur de pression 52, et relève une première mesure d'index de flux N1 à partir du débitmètre 78. L'unité de commande 60 relève en outre la valeur de température T dans l'espace annulaire 24.

On injecte ensuite une quantité de gaz de mesure déterminée à travers la conduite d'injection 74 jusqu'à l'espace annulaire 24.

Lors de l'injection de gaz de mesure, l'unité de commande 60 mesure l'augmentation de pression dans l'espace annulaire 24 et contrôle cette augmentation de pression pour qu'elle reste inférieure à la pression atmosphérique, notamment inférieure à 1 bara, de préférence entre 50 mbara et 800 mbara.

Lorsque l'injection est terminée, l'unité de commande 60 ferme la deuxième vanne d'arrêt 76 pour isoler l'espace annulaire 24.

La pression mesurée dans l'espace annulaire 24 après l'étape d'injection atteint un maximum inférieur à la pression atmosphérique.

L'unité de commande 60 maintient alors l'espace annulaire 24 isolé pendant une période de temps correspondant à une stabilisation de la pression.

La pression mesurée dans l'espace annulaire 24 diminue lors de l'étape de stabilisation du fait de l'homogénéisation du gaz de mesure le long de la conduite 10.

Lorsque la pression mesurée par le capteur 52 se stabilise ou atteint un minimum, l'unité de commande 60 relève une deuxième valeur de pression P2 dans l'espace annulaire 24 à partir du capteur de pression 52 et un deuxième index de flux N2 à partir du débitmètre 78.

Ceci étant fait, l'unité de calcul 62 récupère la valeur de la pression de référence Pr, la première valeur de pression P1, la deuxième valeur de pression P2, le premier index de flux N1, le deuxième index de flux N2 et la valeur de température mesurée T et calcule le volume libre V de l'espace annulaire 24 par l'équation (1) ci-dessus. Ce qui conduit à :

$$V = (N2 - N1) \times R \times T / (P2 - (P1 - Pr)),$$

où R est la constante des gaz parfaits.

En retranchant, dans le calcul de volume libre, la composante de pression (P1 - Pr) liée à la diffusion des gaz contenus dans le fluide circulant dans le passage central interne et ayant diffusés au travers la gaine interne 12 vers l'espace annulaire 24, il ne reste que la composante de pression (P2) liée à l'injection de gaz neutre (azote).

Ainsi, la détermination du volume libre de l'espace annulaire 24 s'en trouve améliorée. Pour les cycles suivants, les relevés de mesure de pression et donc la détermination du volume libre augmente en précision.

En effet, connaissant l'augmentation de pression liée à la diffusion naturelle des gaz ayant diffusés depuis le passage central interne vers l'espace annulaire s'étant produit sur la période de temps Δt, il est possible pour les mesures suivantes, de retrancher ce différentiel de pression lors de la relève de la pression P2, après injection du gaz de mesure, et ce pour un même intervalle de temps Δt. Dès lors, on ne mesure plus que le différentiel de pression lié à l'injection de gaz de mesure.

La détermination du volume libre de l'espace annulaire 24 de la conduite 10 est donc calculé avec précision. Cela se vérifie d'autant plus que la diffusion naturelle des gaz contenus dans le fluide circulant dans le passage central interne est importante.

Bien que cette variante d'exécution de l'invention se rapporte à une méthode de détermination du volume libre d'un espace annulaire d'une conduite flexible dans laquelle l'ensemble des pressions mesurées sont inférieures à la pression atmosphérique, il est tout à fait envisageable de la transposer à une ou plusieurs méthode(s) de détermination du volume libre d'un espace annulaire d'une conduite flexible dans laquelle l'ensemble des pressions mesurées sont supérieures à la pression atmosphérique.

Cette étape supplémentaire est réalisée avant et après les étapes de mise en oeuvre d'au moins un cycle de mesure du volume libre.

Après les étapes mise en oeuvre d'au moins un cycle de mesure du volume libre, l'étape de maintien de l'isolation de l'espace annulaire 24 peut éventuellement être suivi d'une étape de mise en dépression de l'espace annulaire 24 afin que la pression à l'intérieur de l'espace annulaire n'atteigne pas la pression limite à partir de laquelle le phénomène de SCC s'initie.

**Revendications**

1. Procédé de détermination du volume libre d'un espace annulaire (24) d'une conduite flexible (10), la conduite flexible (10) définissant un passage central interne de circulation d'un fluide, l'espace annulaire (24) contenant au moins une couche d'armures de traction (16, 17),

   le procédé comprenant au moins un cycle de mesure comportant les étapes suivantes :

   - mise en dépression de l'espace annulaire (24) et isolation de l'espace annulaire (24) ;
   - relevé d'une première pression (P1) régnant dans l'espace annulaire (24) et de la température (T) régnant dans l'espace annulaire (24), après isolation de l'espace annulaire (24) ;

   **caractérisé par** les étapes suivantes :

- injection dans l'espace annulaire (24) d'une quantité donnée d'un gaz de mesure non issu du passage central interne et isolation de l'espace annulaire (24), l'espace annulaire (24) restant en dépression après l'injection et l'isolation ;

- mesure de la quantité donnée de gaz de mesure injecté dans l'espace annulaire (24) ;

- relevé d'une deuxième pression (P2) régnant dans l'espace annulaire (24), après isolation de l'espace annulaire (24) ;

- détermination du volume libre de l'espace annulaire (24), sur la base de la première pression (P1), de la deuxième pression (P2), de la température (T), et de la mesure de la quantité donnée de gaz de mesure.

2. Procédé selon la revendication 1, comportant, après l'étape d'injection du gaz de mesure et d'isolation de l'espace annulaire (24), une étape de stabilisation de la pression régnant dans l'espace annulaire (24), la deuxième pression (P2) étant relevée après l'étape de stabilisation.

3. Procédé selon la revendication 2, dans lequel la pression régnant dans l'espace annulaire (24) relevée par le capteur de pression (52) après l'étape d'injection atteint un maximum inférieur à la pression atmosphérique, la pression régnant dans l'espace annulaire (24) relevée par le capteur de pression (52) diminuant lors de l'étape de stabilisation.

4. Procédé selon l'une quelconque des revendications précédentes, dans lequel les étapes de relevé de la première pression (P1) et de la deuxième pression (P2) sont effectuées par un capteur de pression (52) situé hors de l'espace annulaire (24) et raccordé à l'espace annulaire (24) ou par un capteur de pression (52) situé dans l'espace annulaire (24).

5. Procédé selon l'une quelconque des revendications précédentes, comportant la fourniture d'un gaz de mesure à l'extérieur de la conduite flexible (10), l'injection de gaz de mesure comportant la circulation de gaz de mesure depuis l'extérieur de la conduite flexible (10) vers l'espace annulaire (24).

6. Procédé selon la revendication 5, dans lequel un débitmètre (78) est interposé entre l'extérieur de la conduite flexible (10) et l'espace annulaire (24), la mesure de la quantité donnée de gaz de mesure étant effectuée sur la base d'au moins une mesure fournie par le débitmètre.

7. Procédé selon l'une quelconque des revendications 5 à 6, dans lequel la mise en dépression de l'espace annulaire (24) est réalisée par une pompe à vide (64) raccordée à l'espace annulaire (24) en parallèle de la fourniture de gaz de mesure (72).

8. Procédé selon l'une quelconque des revendications précédentes, dans lequel le gaz de mesure est un gaz neutre, par exemple de l'azote.

9. Procédé selon l'une quelconque des revendications précédentes, comportant, après le relevé de la deuxième pression (P2) régnant dans l'espace annulaire (24), une étape de pompage du gaz présent dans l'espace annulaire (24) pour à nouveau mettre en dépression l'espace annulaire (24).

10. Procédé selon la revendication 9, comportant, après la nouvelle mise en dépression, au moins un cycle de mesure additionnel comportant les étapes suivantes :

- relevé d'une nouvelle première pression (P1) dans l'espace annulaire (24) et de la température (T) dans l'espace annulaire (24), après isolation de l'espace annulaire (24);

- injection dans l'espace annulaire (24) d'une nouvelle quantité donnée d'un gaz de mesure non issu du passage central interne et isolation de l'espace annulaire (24), l'espace annulaire (24) restant en dépression après isolation ;

- mesure de la nouvelle quantité donnée de gaz de mesure injecté dans l'espace annulaire (24) ;

- relevé d'une nouvelle deuxième pression (P2) régnant dans l'espace annulaire (24), après isolation de l'espace annulaire (24) ;

- détermination d'un nouveau volume libre de l'espace annulaire (24), sur la base de la nouvelle première pression (P1), de la nouvelle deuxième pression (P2), de la température (T), et de la nouvelle quantité donnée de gaz de mesure.

11. Procédé selon la revendication 10, comportant le maintien, entre chaque cycle de mesure, d'une pression inférieure à 1 bara, de préférence entre 5 mbara et 800 mbara au point le plus bas de l'espace annulaire (24).

12. Procédé selon l'une quelconque des revendications précédentes, comprenant, après l'étape de mise en dépression et d'isolation de l'espace annulaire (24), et avant le relevé de la première pression (P1), un relevé d'une pression de référence (Pr), puis une temporisation (Δt) pour laisser se produire une diffusion de gaz depuis le passage central vers l'espace annulaire (24), la détermination du volume libre de l'espace annulaire (24) étant effectuée en utilisant en outre la pression de référence (Pr) relevée.

13. Système (8) de régulation et de contrôle d'une conduite flexible (10) configuré pour mesurer le volume libre d'un espace annulaire (24) de la conduite flexible (10), la conduite flexible (10) définissant un passage central interne de circulation d'un fluide, l'espace annulaire (24) contenant au moins une couche d'armures de traction (16, 17), le système (8) comportant :

- un appareil (64) de mise en dépression de l'espace annulaire (24)
- une vanne d'isolation (68) de l'espace annulaire (24) interposée entre l'appareil de mise en dépression (64) et l'espace annulaire (24) ;
- un capteur de pression (52) régnant dans l'espace annulaire et un capteur de température (54) régnant dans l'espace annulaire (24),

(i) le capteur de pression (52) et le capteur de température (54) étant situés dans l'espace annulaire (24) ou
(ii) le capteur de pression (52) et le capteur de température (54) étant situés hors de l'espace annulaire (24) en étant raccordés à l'espace annulaire (24) ;

caractérisé par :

- un ensemble (58) d'injection de gaz de mesure dans l'espace annulaire (24) ;
- une unité de commande (60) configurée pour piloter l'appareil de mise en dépression (64) pour engendrer une mise en dépression de l'espace annulaire (24), pour piloter la vanne d'isolation (68) pour isoler l'espace annulaire (24) après la mise en dépression, pour relever une première pression (P1) régnant dans l'espace annulaire (24) à l'aide du capteur de pression (52) et pour relever une température (T) régnant dans l'espace annulaire (24) à l'aide du capteur de température (54), après isolation de l'espace annulaire (24) ;

l'unité de commande (60) étant configurée pour piloter l'ensemble d'injection (58) pour injecter dans l'espace annulaire (24) une quantité donnée d'un gaz de mesure non issu du passage central interne et pour piloter la vanne d'isolation (68) pour isoler l'espace annulaire (24), et maintenir l'espace annulaire (24) en dépression après isolation;
l'unité de commande (60) étant configurée pour mesurer la quantité donnée de gaz de mesure injecté dans l'espace annulaire (24), pour relever une deuxième pression (P2) régnant dans l'espace annulaire (24) à l'aide du capteur de pression (52), après isolation de l'espace annulaire (24) ;

le système (8) comportant une unité de calcul (62) configurée pour déterminer le volume libre de l'espace annulaire (24), sur la base de la première pression (P1), de la deuxième pression (P2), de la température (T), et de la quantité donnée de gaz de mesure.

**Patentansprüche**

1. Verfahren zum Bestimmen des freien Volumens eines Ringraums (24) einer flexiblen Leitung (10), wobei die flexible Leitung (10) einen mittleren inneren Zirkulationsdurchgang eines Fluids definiert, wobei der Ringraum (24) mindestens eine Schicht von Zugbewehrungen (16, 17) enthält,

das Verfahren umfassend mindestens einen Messzyklus, umfassend die folgenden Schritte:

- Unterdrucksetzen des Ringraums (24) und Isolieren des Ringraums (24);
- Ablesen eines ersten Drucks (P1), der in dem Ringraum (24) herrscht, und der Temperatur (T), die in dem Ringraum (24) herrscht, nach Isolieren des Ringraums (24);

**gekennzeichnet durch** die folgenden Schritte:

- Einblasen einer gegebenen Menge eines Messgases, das nicht aus dem inneren mittleren Durchgang stammt, in den Ringraum (24) und Isolieren des Ringraums (24), wobei der Ringraum (24) nach dem Einblasen und Isolieren unter Unterdruck bleibt;
- Messen der gegebenen Menge an Messgas, das in den Ringraum (24) eingeblasen wird;
- Ablesen eines zweiten Drucks (P2), der in dem Ringraum (24) herrscht, nach Isolieren des Ringraums (24);
- Bestimmen des freien Volumens des Ringraums (24) basierend auf dem ersten Druck (P1), dem zweiten Druck (P2), der Temperatur (T) und der Messung der gegebenen Menge an Messgas.

2. Verfahren nach Anspruch 1, umfassend nach dem Schritt des Einblasens des Messgases und des Isolierens des Ringraums (24) einen Stabilisierungsschritt des in dem Ringraum (24) herrschenden Drucks, wobei der zweite Druck (P2) nach dem Stabilisierungsschritt angehoben wird.

3. Verfahren nach Anspruch 2, wobei der Druck, der in dem Ringraum (24) herrscht, der von dem Drucksensor (52) erfasst wird, nach dem Einblasschritt ein Maximum erreicht, das niedriger ist als der atmosphärische Druck ist, wobei der Druck, der in dem Ringraum (24) herrscht, der von dem Drucksensor (52) erfasst wird, nach dem Stabilisierungsschritt abnimmt.

4. Verfahren nach einem der vorhergehenden Ansprüche, wobei die Schritte des Erfassens des ersten Drucks (P1) und des zweiten Drucks (P2) durch einen Drucksensor (52), der sich außerhalb des Ringraums (24) befindet und mit dem Ringraum (24) verbunden ist, oder durch einen Drucksensor (52), der sich in dem Ringraum (24) befindet, durchgeführt werden.

5. Verfahren nach einem der vorhergehenden Ansprüche, umfassend das Bereitstellen eines Messgases außerhalb der flexiblen Leitung (10), wobei das Einblasen von Messgas das Zirkulieren von Messgas von außerhalb der flexiblen Leitung (10) zu dem Ringraum (24) umfasst.

6. Verfahren nach Anspruch 5, wobei ein Durchflussmesser (78) zwischen der Außenseite der flexiblen Leitung (10) und dem Ringraum (24) angeordnet ist, wobei die Messung der gegebenen Menge an Messgas basierend auf mindestens einem Messwert, der von dem Durchflussmesser bereitgestellt wird, durchgeführt wird.

7. Verfahren nach einem der Ansprüche 5 bis 6, wobei das Unterdrucksetzen des Ringraums (24) durch eine Vakuumpumpe (64) erfolgt, die parallel zu der Bereitstellung von Messgas (72) an den Ringraum (24) angeschlossen ist.

8. Verfahren nach einem der vorhergehenden Ansprüche, wobei das Messgas ein neutrales Gas ist, beispielsweise Stickstoff.

9. Verfahren nach Anspruch 1, umfassend nach dem Schritt des Einblasens des Messgases und des Isolierens des Ringraums (24) einen Stabilisierungsschritt des in dem Ringraum (24) herrschenden Drucks, wobei der zweite Druck (P2) nach dem Stabilisierungsschritt angehoben wird.

10. Verfahren nach Anspruch 9, umfassend nach dem erneuten Unterdrucksetzen mindestens einen zusätzlichen Messzyklus, umfassend die folgenden Schritte:

  - Ablesen eines neuen ersten Drucks (P1) in dem Ringraum (24) und der Temperatur (T) in dem Ringraum (24) nach Isolieren des Ringraums (24);
  - Einblasen einer gegebenen Menge eines Messgases, das nicht aus dem inneren mittleren Durchgang stammt, in den Ringraum (24) und Isolieren des Ringraums (24), wobei der Ringraum (24) nach dem Isolieren unter Unterdruck bleibt;
  - Messen der neuen gegebenen Menge an Messgas, das in den Ringraum (24) eingeblasen wird;
  - Ablesen eines neuen zweiten Drucks (P2), der in dem Ringraum (24) herrscht, nach Isolieren des Ringraums (24);
  - Bestimmen eines neuen freien Volumens des Ringraums (24) basierend auf dem neuen ersten Druck (P1), dem neuen zweiten Druck (P2), der Temperatur (T) und der neuen gegebenen Menge an Messgas.

11. Verfahren nach Anspruch 10, wobei zwischen jedem Messzyklus ein Druck von weniger als 1 bar(a), vorzugsweise zwischen 5 mbar(a) und 800 mbar(a), am tiefsten Punkt des Ringraums (24) aufrechterhalten wird.

12. Verfahren nach einem der vorhergehenden Ansprüche, umfassend nach dem Schritt eines unter Unterdrucksetzens und Isolierens des Ringraums (24) und vor Ablesen des ersten Drucks (P1) ein Ablesen eines Referenzdrucks (Pr) und dann eine Verzögerung (At), um eine Gasdiffusion aus dem mittleren Durchgang in den Ringraum (24) erfolgen zu lassen, wobei das Bestimmen des freien Volumens des Ringraums (24) unter zusätzlicher Verwendung des abgelesenen Referenzdrucks (Pr) durchgeführt wird.

13. System (8) zur Regulierung und Überwachung einer flexiblen Leitung (10), das konfiguriert ist, um das freie Volumen eines Ringraums (24) der flexiblen Leitung (10) zu messen, wobei die flexible Leitung (10) einen inneren mittleren Durchgang für die Zirkulation eines Fluids definiert, wobei der ringförmige Raum (24) mindestens eine Schicht von Zugbewehrungen (16, 17) enthält, das System (8) umfassend:

  - ein Gerät (64) zum unter Unterdrucksetzen des Ringraums (24)
  - ein Isolationsventil (68) des Ringraums (24), das zwischen das Gerät zum unter Unterdrucksetzen (64) und den Ringraum (24) eingefügt ist;
  - einen Sensor des Drucks (52), der in dem Ringraum herrscht, und einen Sensor der Temperatur (54), die in dem Ringraum (24) herrscht,

    (i) wobei sich der Drucksensor (52) und der Temperatursensor (54) in dem ringförmigen Raum (24) befinden oder
    (ii) der Drucksensor (52) und der Temperatursensor (54) außerhalb des ringförmigen Raums (24) angeordnet sind, indem sie an den ringförmigen Raum (24) angeschlossen sind;

**gekennzeichnet durch**:

- eine Anordnung (58) zum Einblasen von Messgas in den Ringraum (24) ;
- eine Steuereinheit (60), die konfiguriert ist, um das Gerät zum unter Unterdrucksetzen (64) anzusteuern, um einen Unterdruck in dem Ringraum (24) zu erzeugen, das Isolierventil (68) anzusteuern, um den Ringraum (24) nach dem Unterdruck zu isolieren, zum Erfassen eines ersten Drucks (P1 ), der in dem Ringraum (24) herrscht, mittels des Drucksensors (52) und zum Erfassen einer Temperatur (T), die in dem Ringraum (24) herrscht, mittels des Temperatursensors (54), nach Isolieren des Ringraums (24) ;

wobei die Steuereinheit (60) konfiguriert ist, um die Einblasanordnung (58) anzusteuern, um eine gegebene Menge eines Messgases, das nicht aus dem inneren mittleren Durchgang stammt, in den Ringraum (24) einzublasen, und das Isolationsventil (68) anzusteuern, um den Ringraum (24) zu isolieren, und den Ringraum (24) nach Isolieren unter Unterdruck zu halten;
die Steuereinheit (60) konfiguriert ist, um die gegebene Menge des in den Ringraum (24) eingeblasenen Messgases zu messen, um einen zweiten Druck (P2), der in dem Ringraum (24) herrscht, mittels des Drucksensors (52) nach Isolieren des Ringraums (24) zu erfassen;
das System (8) eine Recheneinheit (62) umfasst, die konfiguriert ist, um das freie Volumen des Ringraums (24) basierend auf dem ersten Druck(P1), des zweiten Drucks (P2), der Temperatur (T) und der gegebenen Menge an Messgas zu bestimmen.

**Claims**

1. - Method for determining the free volume of an annular space (24) of a flexible pipe (10), the flexible pipe (10) defining a central internal passage for circulation of a fluid, the annular space (24) containing at least one layer of tensile armor (16, 17),

the method comprising at least one measurement cycle comprising the following steps:

- vacuuming the annular space (24) and isolating the annular space (24);
- measuring a first pressure (P1) in the annular space (24) and the temperature (T) in the annular space (24) after the isolation of the annular space (24);

**characterized by** the following steps:

- injecting into the annular space (24) a given amount of a measuring gas not coming from the internal central passage and isolating the annular space (24), the annular space (24) remaining under vacuum after the injection and the isolation;
- measuring the given amount of measuring gas injected into the annular space (24);
- measuring a second pressure (P2) in the annular space (24) after the isolation of the annular space (24);
- determining the free volume of the annular space (24) on the basis of the first pressure (P1), the second pressure (P2), the temperature (T) and the measurement of the given amount of measuring gas.

2. The method according to claim 1, comprising a step, after the step of injecting the measuring gas and isolating the annular space (24), of stabilizing the pressure in the annular space (24), the second pressure (P2) being measured after the stabilization step.

3. The method according to claim 2, wherein the pressure in the annular space (24) measured by the pressure sensor (52) after the injection step reaches a maximum below atmospheric pressure, the pressure in the annular space (24) measured by the pressure sensor (52) decreasing during the stabilization step.

4. The method according to any one of the preceding claims, wherein the steps of measuring the first pressure (P1) and the second pressure (P2) are carried out by a pressure sensor (52) located outside the annular space (24) and connected to the annular space (24) or by a pressure sensor (52) located in the annular space (24).

5. The method according to any one of the preceding claims, comprising the supply of a measuring gas outside of the flexible pipe (10), the injection of measuring gas comprising the flow of measuring gas from the outside of the flexible pipe (10) to the annular space (24).

6. The method according to claim 5, wherein a flow meter (78) is interposed between the outside of the flexible pipe (10) and the annular space (24), the measurement of the given amount of measuring gas being carried out on the basis of at least one measurement provided by the flow meter.

**7.** The method according to any one of claims 5 to 6, wherein the vacuuming of the annular space (24) is carried out by a vacuum pump (64) connected to the annular space (24) in parallel with the supply of measuring gas (72).

**8.** The method according to any one of the preceding claims, wherein the measuring gas is a neutral gas, for example nitrogen.

**9.** The method according to any one of the preceding claims, comprising a step, after measuring the second pressure (P2) in the annular space (24), of pumping the gas present in the annular space (24) in order to vacuum the annular space (24) again.

**10.** The method according to claim 9, comprising at least one additional measuring cycle after renewed vacuuming, comprising the following steps:

- measuring a new first pressure (P1) in the annular space (24) and the temperature (T) in the annular space (24), after the annular space (24) has been isolated;
- injecting a new given amount of a measuring gas not coming from the internal central passage into the annular space (24) and isolating the annular space (24), the annular space (24) remaining under vacuum after isolation;
- measuring the new given amount of measuring gas injected into the annular space (24);
- measuring a new second pressure (P2) in the annular space (24) after the isolation of the annular space (24);
- determining a new free volume of the annular space (24) on the basis of the new first pressure (P1), the new second pressure (P2), the temperature (T) and the new given amount of measuring gas.

**11.** The method according to claim 10, comprising maintaining a pressure, between each measurement cycle, of less than 1 bara, preferably between 5 mbara and 800 mbara, at the lowest point of the annular space (24).

**12.** The method according to any one of the preceding claims, comprising, after the step of vacuuming and isolating the annular space (24), and before the first pressure (P1) is measured, a measuring of a reference pressure (Pr), followed by a time delay ($\Delta t$) for allowing gas diffusion to occur from the central passage to the annular space (24), the determination of the free volume of the annular space (24) being carried out by further using the measured reference pressure (Pr).

**13.** A system (8) for regulating and controlling a flexible pipe (10) configured for measuring the free volume of an annular space (24) of the flexible pipe (10), the flexible pipe (10) defining a central internal passage for circulation of a fluid, the annular space (24) containing at least one layer of tensile armor (16, 17), the system (8) comprising:

- an apparatus (64) for vacuuming the annular space (24)
- an isolation valve (68) for isolating the annular space (24) interposed between the vacuuming apparatus (64) and the annular space (24);
- a pressure sensor (52) for measuring a pressure in the annular space and a temperature sensor (54) for measuring a temperature in the annular space (24),

(i) the pressure sensor (52) and the temperature sensor (54) being located in the annular space (24) or
(ii) the pressure sensor (52) and the temperature sensor (54) being located outside the annular space (24) while being connected to the annular space (24);

**characterized by**:

- an assembly (58) for injecting measuring gas into the annular space (24);
- a control unit (60) configured to control the vacuuming apparatus (64) for generating a vacuuming of the annular space (24), to control the isolation valve (68) for isolating the annular space (24) after the vacuum has been generated, to read a first pressure (P1) in the annular space (24) by means of the pressure sensor (52) and to read a temperature (T) in the annular space (24) by means of the temperature sensor (54) after the annular space (24) has been isolated;

the control unit (60) being configured to control the injection assembly (58) to inject into the annular space (24) a given amount of a measuring gas not coming from the internal central passage and to control the isolation valve (68) to isolate the annular space (24), and to maintain the annular space (24) under vacuum after isolation;
the control unit (60) being configured to read the given amount of measuring gas injected into the annular space (24), to read a second pressure (P2) in the annular space (24) by means of the pressure sensor (52) after the annular space (24) has been isolated;
the system (8) comprising a calculation unit (62) configured to determine the free volume of the annular space (24) on the basis of the first pressure (P1), the second pressure (P2), the temperature (T) and the given amount of measuring gas.

## FIG.1

FIG.2

FIG.3

**EP 3 850 185 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017145808 A

- WO 2014000760 A

**Littérature non-brevet citée dans la description**

- **J. SMITH FRANCK.** *UKOOA Guidance Note on Monitoring Methods and Integrity Assurance for Unbonded Flexible Pipe*
- **DOMINIQUE DION.** *Flexible Pipe Integrity Monitoring: A New System to Assess the Flexible Pipe Annulus Condition*

- Spécification for Unbonded Flexible Pipe. l'American Petroleum Institute (API), API 17J, Mai 2014
- Recommended Practice for Flexible Pipe. API RP 17B, Mai 2014
- API 17J. l'American Petroleum Institute (API), Mai 2014
- API RP17B. Mai 2014